Europäisches Patentamt

European Patent Office

Office européen des brevets

(11) Publication number: **0 023 741**
A1

## EUROPEAN PATENT APPLICATION

(21) Application number: **80200703.9**

(22) Date of filing: **18.07.80**

(51) Int. Cl.³: **G 09 F 9/30, G 02 F 1/19**

(30) Priority: **02.08.79 US 63634**
**02.08.79 US 63214**

(43) Date of publication of application: **11.02.81**
**Bulletin 81/6**

(84) Designated Contracting States: **CH DE FR GB IT LI NL**

(71) Applicant: **N.V. Philips' Gloeilampenfabrieken, Pieter Zeemanstraat 6, NL-5621 CT Eindhoven (NL)**

(72) Inventor: **Dalisa, A.L., c/o INT. OCTROOIBUREAU B.V. Prof. Holstlaan 6, NL-5656 AA Eindhoven (NL)**
Inventor: **Seymour, R.J., c/o INT. OCTROOIBUREAU B.V. Prof. Holstlaan 6, NL-5656 AA Eindhoven (NL)**

(74) Representative: **Zwaan, Andries Willem et al, INTERNATIONAAL OCTROOIBUREAU B.V. Prof. Holstlaan 6, NL-5656 AA Eindhoven (NL)**

(54) **Electrophoretic image display device.**

(57) A light transmissive electrophoretic image display device is provided, which device comprises a light transmissive first panel element (34) and a light transmissive second panel element (24). A light transmissive first electrode (44) and a light transmissive second electrode (70) are disposed on the opposing surfaces of the first and second panel element (34, 24) respectively. A light transmissive fluid 68 containing colloidal particles (76) having a charge of one polarity is held between the plate elements (34, 24). The refractive indices of the fluid (68) and the particles (76) differ from each other and the second panel element (24) has a refractive index greater than the refractive index of the fluid (68). Illumination (26) received in the second panel element (24) is totally internally reflected at the regions free of particles (76) and illumination (26) is coupled into the device at the regions (80) where particles (76) are present. The device can also be used in a reflective mode in order to provide projection of the image formed by the device to a viewing screen.

"Electrophoretic image display device."

The invention is related to an electrophoretic image display device comprising a light transmissive first panel element, a light transmissive second panel element spaced from said first panel element, a light transmissive first electrode disposed on said first panel element, a light transmissive second electrode disposed on said second panel element, said first and second electrode being disposed on opposite surfaces of the first and second panel elements, an insulating fluid disposed between said first and second panel element, said fluid containing colloidal particles in suspension and said particles having a charge of one polarity.

Such a device is disclosed in United States Patent Specification 3,668,106. This electrophoretic image display (EPID) device is a passive, light scattering-type display. In one embodiment, the pigment particles are negatively charged with respect to the fluid. If a positive potential is applied to an electrode in electrical contact with the suspension, the negatively charged pigment particles will be attracted to that electrode. A negative potential on an electrode repels the particles. When light coloured pigment particles are attracted to the transmissive panel element, the observer looking at the panel sees the reflected colour of the pigment. A dark-coloured dye is included in the insulating fluid, so that the pigment particles at the back of the cell are obscured by the opaque fluid and the observer sees only the reflected colour of the fluid. When the polarity of the voltage on the electrodes is reversed the position of the colour is reversed. The described EPID device also possesses "memory" since the particles remain on the electrodes after the applied voltages are removed due to chemical, electrical, or van der Waals forces.

0023741

Another electrophoretic image display device is disclosed in the European Patent Application 0,002,094. This device comprises a third control electrode, which is interposed between the first and second electrodes, and is separated from the second electrodes by an insulating layer. The third control electrode adjusts the electrical field between the first and second electrodes to establish a threshold for transporting the particles, causing an image to be formed on the main electrodes by the presence or absence of the particles. The first and third electrode each form a plurality of strip-shaped conductors, whereby the conductors of the third electrode cross the conductors of the first electrode. In this way a device is obtained, which is matrix addressable.

The devices disclosed in the above applications are highly desirable and provide a significant advance in the art. However, these devices require the presence of an opaque dye in the insulating fluid so as to prevent light from colloidal particles that are not present at "written" areas of the display, from reaching the viewer. Because of the opaque dye these devices are limited to light-scattering and direct viewing  type devices.

It is therefore an object of the invention to provide a light-transmitting EPID device, which overcomes this shortcoming and provides additional benefits by not requiring the presence of an opaque dye in the insulating fluid. Another object of the invention is to provide an EPID-device, which not requires an opaque dye and which operates in the reflection mode in order to provide projection of the image formed by the EPID-device,to a remote viewing apparatus.

These objects of the present invention are made possible by using an electrophoretic image display device of the kind mentioned in the preamble, which is characterized in that the insulating fluid and the particles are light transmissive and have refractive indices that are different from each other, and the second panel element has a refractive index greater than the refractive index of the fluid, such that the refractive indices of said particles and said second panel element define a critical angle which is greater than the angle of incidence of illumination at the interface between the second panel element and the fluid, and the refractive indices of said fluid and said second panel element define a critical angle which is smaller than the angle of incidence of illumination at the said interface. At the areas where no particles are present illumination which enters the second panel element is totally internal reflected at the interface, because the fluid has a refractive index lower than that of the second panel element. At these areas no light is transmitted, which cause corresponding parts of the image to be dark when viewed from the side of the first panel element. At the areas where colloidal particles are present light is coupled into the suspension by the colloidal particles, because the refractive indices of the particles and the second panel element define a critical angle which is greater than the angle of incidence of illumination at the interface. At those areas light is transmitted through the device.

It is noted that from the German Patent Application 2,509,867 a liquid crystal display device is known, which has a totally internal reflective surface at the interface with the liquid crystal film. The total reflection can be disturbed by varying the orientation of the liquid crystal molecules in the liquid crystal film, and therewith varying the index of refraction of the liquid crystal film. The device according to the invention does not use a liquid crystal display, but an electrophoretic image display, which is provided with pigment particles suspended in a light-transmissive insulating fluid.

The refractive indices of the particles and the second panel element can be such that the particles have a refractive index greater than that of said second panel element. The second panel element has for example a refractive index of about 1.7, the fluid a refractive index of 1.5, and the particles a refractive index of about 2.0.

0023741

The refractive indices of the particles and the second panel element can also be such that the particles have a refractive index smaller than that of the second panel element.

Various elements having many respective indices of refraction can be used for the second panel element, so long as the critical angle for the fluid is smaller than and the critical angle for the particles is greater than the angle of the illumination at the interface between the second panel element and the fluid.

According to a first embodiment the second panel element comprises a prism. The prism has a first and a second surface, with the first prism surface being adapted to receive illumination, which illumination is refracted towards the second prism surface. The illumination is reflected at the interface between the second surface and the fluid. At the interface total internal reflection of the illumination occurs except at the areas the colloidal particles are present. At those areas light is coupled into the fluid and reaches the viewer at the side of the first panel element. In this way a light transmissive EPID-device is obtained, which has good contrast and a wide viewing angle.

It is also possible to operate the display device according to the first embodiment in the reflection mode. Such a reflective type EPID-device can advantageously be used in a projection display system to control the reflection of light from a light source to a viewing screen. At the areas of the interface between the prism and the fluid where particles are present, the reflection of the light is frustrated. These areas will appear as a dark image on the viewing screen since little light is reflected from the interface.

According to a second embodiment the second panel element comprises a member having a surface with a generally sawtooth profile at the side of said interface. The mode of operation is generally the same as that for the prism. Total internal reflection occurs at those areas of the interface that are free of particles and light coupling
occurs at other areas at which colloidal particles are
located.

According to a third embodiment the second panel
element comprises a member having a substantially flat first
surface at the side of said interface, a second surface
substantially parallel to said first surface, and further
a third surface which is angularly disposed with respect
to said first surface. The third surface functions as a
light receiving surface. Illumination impinging upon this
third surface enters the member, where it is reflected between the first and second surfaces light is coupled into
the suspension at those interface areas, at which colloidal
particles are present and is totally reflected from other
interface areas free of particles.

The invention will now be described in greater
detail with reference to the accompanying drawing in which

Fig. 1 is a sectional side elevation view schematically depicting an electrophoretic display device
according to the prior art cell.

Fig. 2 is a sectional side elevation view
schematically depicting a light-transmitting EPID cell
according to a first embodiment of the present invention;

Fig. 3 is a cutaway perspective view of the device
shown in Fig. 2;

Figs. 4 and 5 are sectional side elevation views
schematically depicting light-transmitting EPID cells
according to a second and third embodiment of the present
invention.

Fig. 6 is a partial schematic view depicting a
projection display system comprising an electrophoretic
display device according to the present invention operating
in the reflection mode; and

Fig. 7 is a sectional side elevational view
schematically showing the electrophoretic display device
in the projection display system shown in Fig. 6.

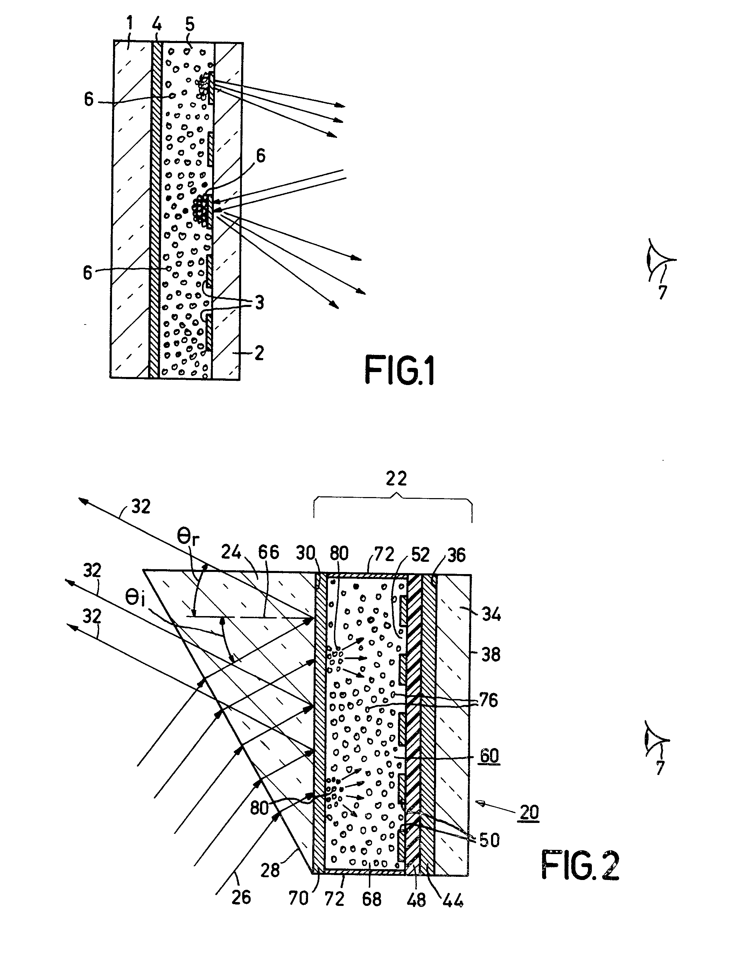

In Figure 1 an electrophoretic display device
according to the prior art is shown. The device is a passive

0023741

light scattering type display and consists of two panel elements 1 and 2, of which the panel element 2 is transparent. The panel element 2 is provided with a number of transparent electrodes 3 and the panel element 1 is provided with an electrode 4. Between the panel elements 1 and 2 an opaque insulating fluid 5 is held. The fluid 5 contains colloidal pigment particles 6 in suspension. Substantially all of the particles have a charge of one polarity. If, for example, the pigment particles are negatively charged, a positive potential applied to an electrode 3 will attract the particles to that electrode. An observer 7 looking at the device sees at that electrode 3 the reflected colour of the pigment particles 6. A negative potential applied to an electrode 3 repels the particles and now the observer sees only the reflected colour of the opaque fluid 5. The described RPID cell also possesses "memory" since the particles 6 remain on the electrodes after the applied voltages are removed due to chemical electrical or van der Waals forces.

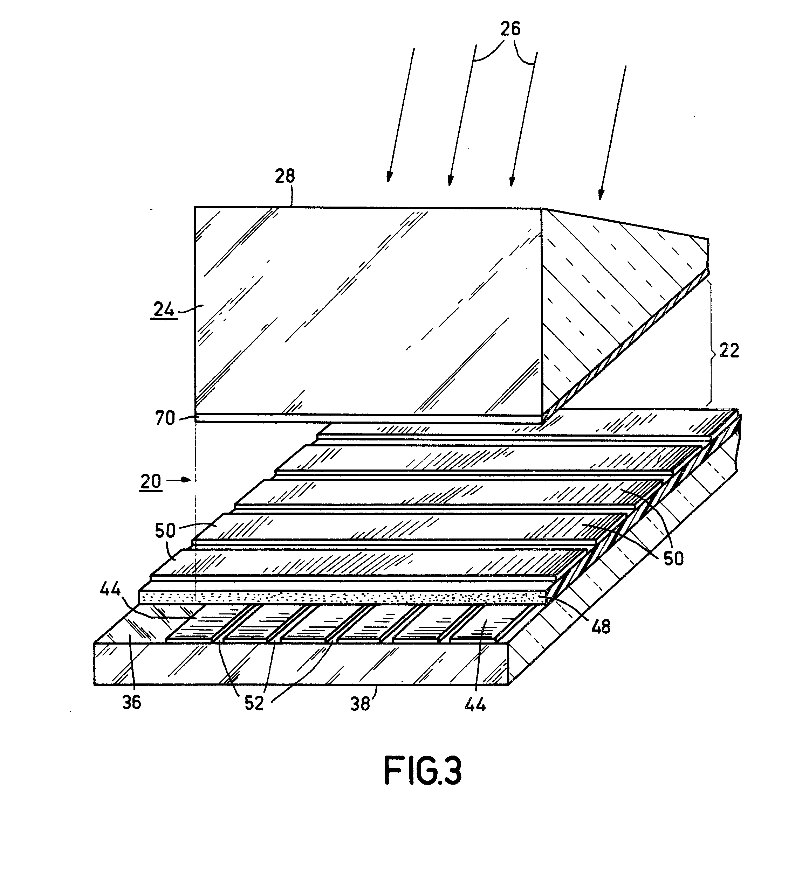

    Referring to Figs. 2 and 3, there is schematically shown a sectional side elevation view of an EPID device 20 according to a preferred embodiment of the present invention. The electrophoretic display device 20 contains an electrophoretic cell element 22 (described below) and a light transmissive panel 24 that can receive illumination 26 and serve to cause total internal reflection of such illumination. The light transmissive panel 24 comprises, in this embodiment, an optical prism having first and second surfaces 28, 30 with the first prism surface 28 being adapted to receive illumination 26, which illumination is refracted towards the second prism surface 30 as shown. The illumination 26 is reflected at the interface between the colloidal suspension 60 and the second surface 30 (as indicated by arrows 32), i.e., total internal reflection of the illumination or light rays occurs, except at predetermined areas of the second surface 30, as indicated hereinafter. The cell element 22 comprises a light transmissive panel plate 34 having first and second major surfaces 36, 38, respectively, the plate 34 being disposed so that the first
surface 36 thereof faces the second surface 30 of the
light transmissive panel 24. The cell element 22 of the
EPID device 20 includes, in addition to the flat panel
34, which can be of glass or transparent plastic of, e.g.,
about 1.5 mm thickness, a plurality of parallel light
transmitting conductive electrodes 44 disposed at the
first major surface 36 of the panel 34, an insulating layer
48, a plurality of light transmitting electrodes 50, a
colloidal suspension 60, and a light transmissive electrode
70, as described in detail below.

The conductive electrodes 44 serve as column
electrodes and can be composed of, for example, indium
oxide typically applied to the panel 34 by means of sputtering. In the present embodiment, the column electrodes 44
are typically 300 nm. thick and have a width of 2.5 mm and
their length depends upon the extent and size of the display
device itself.

The panel 34 and the column electrodes 44 are
covered with the light transmissive insulating layer 48
that can be, for example, a photoresist or other dielectric
material, and the insulating layer 48 is, e.g., from 5 to
50 /um thick and applied by a dip coating process. The
electrodes 50 serve as row electrodes (which preferably
are of transparent material, such as tin oxide or indium
oxide, for example) are disposed at the available surface
of the insulating layer 48 in the form of parallel strips
extending transversely to the column electrodes 44. The
row electrodes 50 can be of aluminium instead of transparent material so long as transparent areas are available
for light to be transmitted through the cell, and can be
formed by vacuum evaporation. These electrodes 50 are
separated, at least in part, from the column electrodes 44
by the insulating layer 48. In general, either of the row
or column electrodes can be light opaque so long as at
least a major portion of the cell area is light transmissive so as to permit light to pass therethrough. The
row electrodes 50 can have a thickness of about 70 nm. and

a width of about 2.5 mm. The interelectrode spacing 52 of the row electrodes 50 can be similar to that of the column electrodes 44, i.e., from 25-100 /um.

In a preferred form, the row electrodes 50 and insulating layer 48 are patterned as described in the above European Patent Application 0,002,094 and have minute pockets or holes (not shown) which extend down to the column electrodes 44. While this form of electrode arrangement is preferred, other electrode systems can be used in the present invention, e.g., a simple patterned electrode system such as a seven-segment numeric system.

The above disclosed holes (not shown) of the row electrodes 50 and insulating layer 48, extend completely through the respective row electrodes 50 and insulator material 48, and expose the column electrodes 44 to the electrophoretic fluid 60, so that the row electrodes 50 serve as a control grid. The holes, therefore, form pockets or cavities which serve as physical wells into which the pigment particles 76 are able to migrate, depending upon the electric field present. The holes can cover at least 50% and more typically 60-70% of the row electrode surface.

An exemplary electrical configuration for operation of a display cell is that described in the above EP-PA 0,002,094 shown in highly schematic form. Briefly described, the continuous electrode 70 is grounded, although in other operation modes, a positive or negative voltage may be applied to the continuous electrode 70. First and second ones of the column electrodes 44 are connected to respective first and second switches, the row electrodes 50 being connected to other sources of potential. By changing the polarity of the row and column electrodes in a manner similar to that detailed by the EP-PA 0,002,094 the colloidal particles 76 will be attracted to or repelled from the continuous electrode 70 or the column electrodes 44, as the case may be thereby forming the pattern for the desired image in the appropriate regions of the cell 20. At those regions where the colloidal particles are in

contact with the continuous back electrode 70, light is coupled into the cell as detailed, below.

The panel or prism 24 is provided opposite the second panel 34 and the plane major surface 30 of the first panel 24, which surface 30 faces the second panel 34, is coated with the electrode layer 70. The electrode 70 is preferred to be a continuous transparent electrode layer and can be, e.g., an optically thin layer of indium oxide adherent to the prism 24 and applied by the process of sputtering. Where the electrode layer 70 is not optically thin, its index of refraction influences the operation of the device and must be taken into consideration. The spacing between the continuous electrode 70 (Fig. 2) and the control electrodes 44, 50 can be approximately 40 μm. The end portions 72 between panels 24 and 34 are sealed (shown in Fig. 2) so that a fluid may be contained therebetween.

The region between the column electrodes 44 and the continuous electrode 70 is filled with an "electrophoretic fluid", such as a colloidal suspension 60 comprised of a dielectric fluid 68, such as, e.g., a mixture of xylene and perchlorethylene, and transparent or coloured particles 76 homogeneously dispersed therein. These particles 76 can be transparent or can be pigmented, so long as they are light transmitting. This suspension 60 is more generally referred to throughout the specification as an "electrophoretic fluid". All particles 76 in the suspension 60 have a charge of one polarity which is achieved by the addition of charging agents to the liquid with some examples of suitable agents being an amine attached to a polymeric hydrocarbon chain.

The respective indices of refraction of the insulating fluid 68, the colloidal particles 76, and the panel, or prism 24 and the angles of incidence of the light rays are determined to satisfy the following equation:

$$\theta_c = \sin^{-1}\left(\frac{n_1}{n_2}\right)$$

where: $\theta_c$ is the critical angle

0023741

$n_1$ is the index of refraction of the fluid or of the particles, depending on which is present at a particular area of the interface between the fluid particle colloidal suspension and the panel or prism,

$n_2$ is the index of refraction of the panel or prism at the interface with the colloidal suspension.

The angle of incidence $\mathcal{O}_i$, which is defined as the angle between a light ray and a normal 66 to the interface between the colloidal suspension and the panel or prism 24, should exceed the critical angle $\mathcal{O}_c$ for the fluid 68 but not $\mathcal{O}_c$ for the particles 76, in order for satisfactory light coupling to occur between the panel or prism 24, and the colloidal suspension 60. The angle of reflection is designated in the figures as $\mathcal{O}_r$.

Various elements having many, if not all, respective indices of refraction can be used for the present invention, so long as the above relationship is met. The prism 24 can habe a refractive index of about 1.7, while the colloidal particles 76 can have a refractive index of about 2.0 and the insulating fluid 68 can have a refractive index of about 1.5. It is important that the insulating fluid 68 of the cell always have a refractive index less than that of the prism 24 and that refractive index for the colloidal particles 76 be such that the angle of incidence not exceed $\mathcal{O}_c$ so as to achieve the desired light coupling by the particles 76, as described below.

The visual effects of the EPID operation are shown in Fig. 2, where the front side 38 of the EPID device is used for display, as is shown by the placement of the observer, the back side, at which the prism is located, not providing an image. The observer views through transparent panel 34 the displayed image which is composed of the various light rays coupled into the colloidal suspension 60 by the colloidal particle clusters 80 attracted to the continuous electrode 70 by the electrical addressing system comprising the various electrodes 44, 50, 70. Since the electrophoretic fluid 68 is transparent the light coupled by the colloidal particle aggregrates or clusters 80
passes therethrough and through the transparent electrodes
50, 44 and insulating layer 48, to the observer. The colloidal particles 76 do not materially aggregrate in the
region of the transparent electrode 50 and insulating layer
48 so the observer 1 sees light transmitted through the
cell from the areas of the colloidal particle clusters 80.
Those areas of the continuous electrode 70 that are substantially free of aggregrates of the particles 76 do not
couple the incident illumination at the colloid-plate
interface at electrode 70 into the colloidal suspension
60 so that no significant amount of light is transmitted
at these areas, which cause corresponding parts of the
image to be dark. No light is transmitted at these parts
because the fluid 68 has a refractive index sufficiently
lower than the prism 24 so that $\Theta_i > \Theta_c$. Light coupling
by the particles 76 is achieved because they have an index
of refraction sufficiently high compared to the index of
refraction of the prism so that $\Theta_i < \Theta_c$. In one embodiment
of the invention, a light colored yellow pigment is used.
The display cell possesses "memory" since the pigment
particles remain on or adjacent to the electrode 70, when
the applied voltages are removed, due to electrical,
chemical and van der Waäls forces. Where physically larger
displays are desired, various arrangements employing the
various embodiment of the present invention can be utilized,
e.g., one in which a number of arranged prisms, such as
prism 24 in Fig. 2, are disposed on the display cell in
the place of a single larger prism, each of the arranged
prisms functioning in the same way as prism 24.

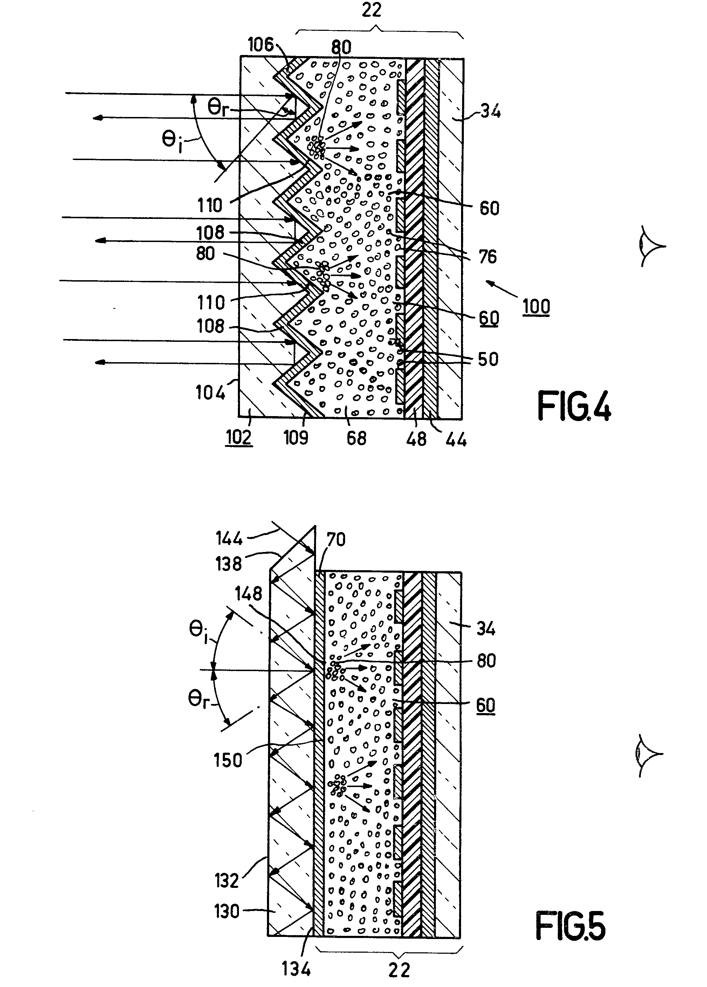

According to a second embodiment of the present
invention, the electrophoretic display system 100 (Fig. 4)
comprises an electrophoretic cell element 22 comparable
to that of the embodiment shown in Fig. 2, with corresponding elements of the embodiments of Fig. 2 and 4 identical-
ly numbered. The present system comprises a second panel
102 which has a first surface 109 that has a general profile
of a sawtooth and an opposite second surface 104 that is

0023741

substantially flat. A continuous electrode 106, whose profile generally resembles that of the surface 109, is disposed at the first surface 109, and the refractice index relationships above described with regard to the embodiment of Fig. 2 apply to the present embodiment, as does the relationship for the critical angle $\theta_c$.

The mode of operation of the system 100 is generally the same as that for the system of Fig. 2. Specifically, the electrode potentials are applied so that particle aggregrates 80 are formed at the desired areas of the continuous electrode 106, as shown in Fig. 4. The angle of incidence $\theta_i$ at the interface between the panel 102 and the colloidal suspension is such that total internal reflection occurs at those areas 108 of the interface that are substantially free of particle aggregrates and the reflected light is retroreflected out of the panel 102, and such that light coupling occurs at other areas 110 of the interface at which colloidal particle aggregrates 80 are located. The light coupling precludes total internal reflection at these other interface areas 110, and light passes through the cell to the observer. Those areas 108 at which total internal reflection occurs will appear as dark areas of the image and the light transmitted through the cell provides the light areas.

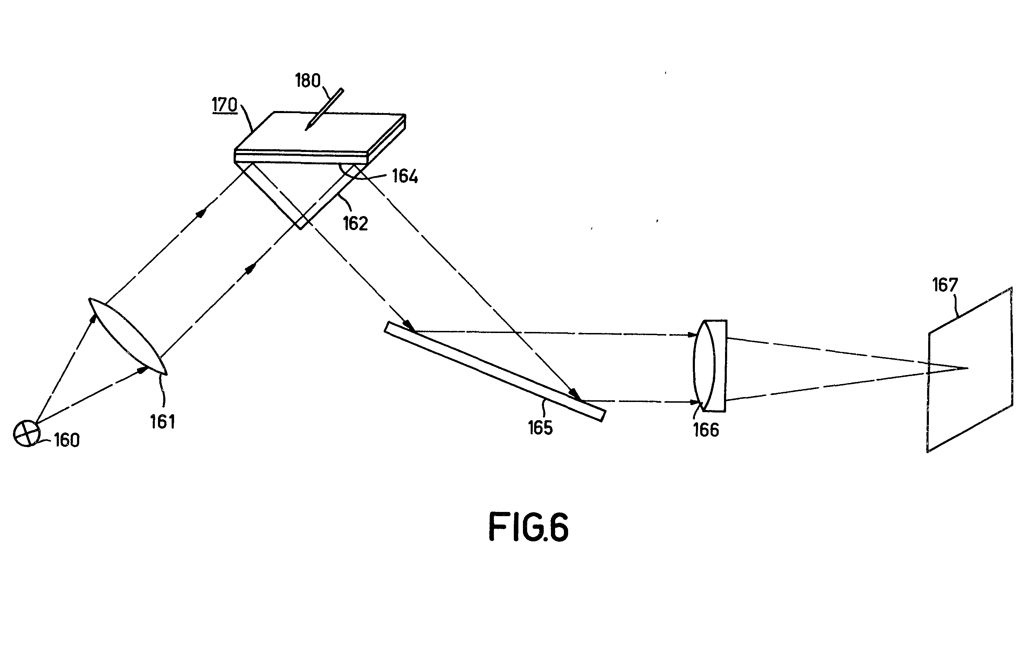

According to a further embodiment (Fig. 5) of the invention, the second panel 130 of the system that is employed with a cell element 22 (similar to that shown in Fig. 2, with similar components being identically numbered) comprises plane parallel first and second major surfaces 132, 134, with the continuous electrode 70 of the cell element located at the first surface 134. At an end of the plate 130, a light-receiving third surface 138 is angularly disposed with respect to the major surfaces to provide edge lighting effects where light entering surface 138 is trapped by total internal reflection within panel 130, except as described hereinafter.

Illumination impinging upon surface 138 enters the panel 130, where it is reflected as shown between the

0023741

surface 134 at the interface between the plate 130 and the suspension 60, on the one hand, and the surface 132 between the plate 130 and air, on the other hand. The surface 132 may be provided with an opaque layer, e.g., felt cloth or black plastic. Light is coupled into the suspension 60 at those interface areas 148 at which colloidal particle clusters 80 are formed and is reflected from other interface areas 150 substantially free of the coupling colloidal particles. The coupled light passes through the cell to the observer, as described above, with no light emanating from the cell at those regions 150 which are free of the clusters 80, hence providing a light and dark image of the information written into the cell. The areas 148 having the clusters 80 or the other areas 150 without such clusters can be considered the "writing" embodying the displayed information.

The projection system provided with an electrophoretic image display device according to the present invention may be constructed as illustrated in Fig. 6. A light source 160 is collimated by collimating lens 161 to a totally internally reflecting (TIR) prism 162 having the total reflecting surface 164 interfacing with an EPID type cell 170. The light reflected from the reflecting surface 164 of the TIR prism 162 is thereafter directed by way of mirror 165 through a projecting lens 166 onto a viewing screen 167.

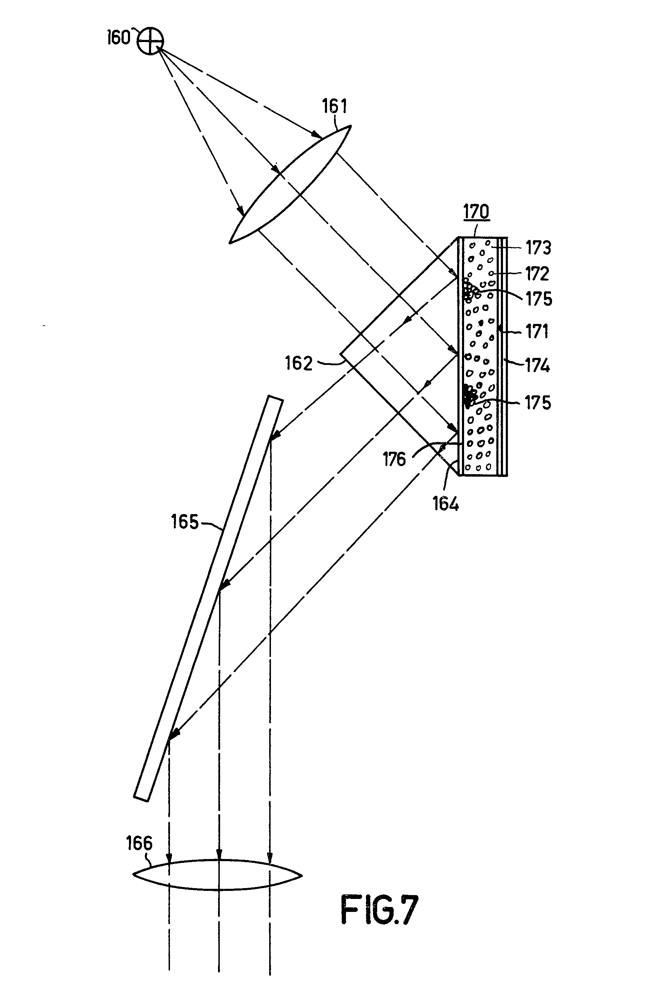

By reference to Fig. 7, control of total internal reflected light in the prism 162 by the EPID type cell 170 may be understood. Namely, the EPID type cell 170 comprises a construction having a thin light transmissive electrode 176 disposed at the total internal reflecting surface 164 of the prism 162. A further electrode structure 171 is spaced from the first electrode 176 and a colloidal suspension of electrophoretic particles 172 is provided in an insulating liquid 173 in the space between the electrode structures 176 and 171. A light transmissive plate 174 is disposed adjacent to the electrode structure 171.

Application of appropriate voltages between the electrode structures 176 and 171 can cause transport of
the electrophoretic particles 172 in the insulating liquid
173 onto the surface of either of the electrode structures.
Where the electrode structures are formed in an addressable
manner, as shown in the embodiment of fig. 2 and 3, then
the transport of the electrophoretic particles 172 may
be in image-wise fashion at selected regions or areas of
the electrode surface. Under the condition that the index
of refraction of the insulating liquid 173 is less than
the index of refraction of the prism 162 and/or the electrode coating 176, and the index of refraction of the
electrophoretic particles 172 is greater than the index
of refraction of the prism 162, then the deposition 175 of
the electrophoretic particles at the prism-liquid interface
or surface 164 frustrates total internal reflection of the
prism 162 at those regions. Consequently, light will be
scattered into the EPID cell at the regions 175 and will
appear as dark areas on the viewing screen 167 since very
little reflected light is projected to the screen 167 from
these regions.

Accordingly, by applying appropriate voltages on
the electrode structures 176 and 171 of the EPID type cell,
images can be formed which are projected to the viewing
screen 167. Because the particles 175 may be maintained at
the surface 22 by way of electrical, chemical, and/or van
der Waals forces even after the voltage applied to the
electrodes is removed, then the display device exhibits
an inherent memory. Removal of the electrophoretic particles
from the aggregrated regions can be by way of the application of an appropriate counter force.

A scanning laser may be utilised to write information into the EPID type cell. As an operative possibility,
all of the electrophoretic particles are first brought to
the surface electrode structure 171 by applying a voltage
of appropriate polarity. A small reverse voltage is then
applied such that the particles remain attached to the
surface, but when the scanning laser beam breaks the van
der Waal's type bond between the particles and the surface, the freed particles will move to the TIR-electrode surface 164, i.e. the prism-liquid interface. After all lines are scanned, the cell can be erased by the application of the same initial voltage pulse.

In a further operative mode, all of the electrophoretic particles may be attracted to one surface, as above where the voltage is then removed, and an information writing instrument 180 (Fig. 6), such as an electrostatic pencil writes information by hand onto the cell surface 174. In this regard, if all of the particles have been previously attracted to the electrode structure 176, then electrostatic pencil 180 repels particles to the opposite surface 176, or the TIR-interface. On the other hand, all of the particles may be initially attracted to the electrode 176 (with the subsequent removal of the voltage, as above), and then the writing of the information with the electrostatic pencil 180 would attract the particles away from the TIR surface to the electrode structure 171. Reversal of the charge on the electrostatic pencil would permit local erasure.

The writing of information by hand with the electrostatic pencil provides local changes in the position of the electrophoretic particles. As such, an image of the information written onto the EPID type cell surface 174 would be projected to the viewing apparatus 167. A remote blackboard arrangement, thus results in as much as an operator can write information onto the surface of the EPID cell, which information is then projected to a remote position for viewing by others.

CLAIMS:

1.      An electrophoretic image display device comprising a light transmissive first panel element, a light transmissive second panel element spaced from said first panel element, a light transmissive first electrode disposed on said first panel element, a light transmissive second electrode disposed on said second panel element, said first and second electrode being disposed on opposite surfaces of the first and second panel elements, an insulating fluid disposed between said first and second panel element, said fluid containing colloidal particles having a charge of one polarity, characterized in that the insulating fluid and the particles are light transmissive and have refractive indices that are different from each other, and the second panel element has a refractive index greater than the refractive index of the fluid, such that the refractive indices of said particles and said second panel element define a critical angle which is greater than the angle of incidence of illumination at the interface between the second panel element and the fluid and the refractive indices of said fluid and said second panel element define a critical angle which is smaller than the angle of incidence of illumination at the said interface.

2.      An electrophoretic image display device as claimed in Claim 1, characterized in that the particles have a refractive index greater than that of said second panel element.

3.      An electrophoretic image display device as claimed in Claim 2, characterized in that the second panel element has a refractive index of about 1.7, the fluid has a refractive index of about 1.5, and the particles have a refractive index of about 2.0.

4.      An electrophoretic display device as claimed in Claim 1, characterized in that the particles have a refractive index smaller than that of the second panel element.

5. An electrophoretic display device as claimed in Claim 1, 2, 3 or 4, characterized in that the second panel element comprises a prism.

6. An electrophoretic display device as claimed in Claim 1, 2, 3 or 4, characterized in that the second panel element comprises a member having a surface with a generally sawtooth profile at the side of said interface.

7. An electrophoretic display device as claimed in Claim 1, 2, 3 or 4, characterized in that the second panel element comprises a member having a substantially flat first surface at the side of the said interface, a second surface substantially parallel to said first surface, and further a third surface which is angularly disposed with respect to said first surface.

0023741

FIG.1

FIG.2

1-Ⅴ-PHA 20.910 C

FIG.3

FIG.4

FIG.5

3-Ⅳ-PH A 20.910$^C$

FIG.6

4-Ⅴ-PHA 20.910C

0023741

FIG.7

European Patent
Office

EUROPEAN SEARCH REPORT

0023741

Application number

EP 80200703.9

| Category | Citation of document with indication, where appropriate, of relevant passages | Relevant to claim |
|---|---|---|
| D,A | US - A - 3 668 106 (MATSUSHITA)<br>* Totality * | |
| D,A | EP - A2 - 2 094 (NORTH AMERICAN PHILIPS)<br>* Totality * | |
| D,A | DE - A1 - 2 509 867 (COMMISSARIAT)<br>* Totality * | |
| A | IEEE Transactions on Electron Devices, Vol. ED-24, No 7, July 1977, New York<br>* Pages 827 - 834 * | |
| A | AT - B - 218 585 (AGFA)<br>* Page 2, line 55 - page 3, lines 10, 38 - 48 * | |
| A | DE - B2 - 2 726 628 (INTERNATIO-NAL)<br>* Fig. 1-4; column 2, line 54 - column 4, line 51 * | 1,2,4 |
| | AT - B - 223 670 (AGFA)<br>* Fig. 1-4; page 2, lines 10-12, 39-42; page 3, lines 3, 28-56 * | 3,5,6 |
| | GB - A - 1 330 089 (ALVIN MELVILLE MARKS)<br>* Page 1, lines 10-16; page 3, lines 9,10 * | 3 |

## DOCUMENTS CONSIDERED TO BE RELEVANT

**CLASSIFICATION OF THE APPLICATION (Int. Cl. 3)**

C 09 F 9/30
G 02 F 1/19

**TECHNICAL FIELDS SEARCHED (Int.Cl. 3)**

G 02 F 1/00
G 03 G 17/00
G 09 F 9/00
H 01 J 29/00
H 01 J 31/00
H 04 N 3/00
H 04 N 9/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X | The present search report has been drawn up for all claims

Place of search
VIENNA
Date of completion of the search
04-11-1980
Examiner
BENISCHKA

EPO Form 1503.1 06.78

| Category | Citation of document with indication, where appropriate, of relevant passages | Relevant to claim | CLASSIFICATION OF THE APPLICATION (Int. Cl.) 3 |
|---|---|---|---|
| | **DOCUMENTS CONSIDERED TO BE RELEVANT** | | |
| | US - A - 3 257 903 (ALVIN M. MARKS)  * Fig. 1; column 2, lines 47-66; column 5, line 69 - column 6, line 4 * | 3 | |
| | CH - A5 - 600 470 (BBC)  * Fig. 4; column 2, lines 48 - 58 * | 5 | |
| | US - A - 3 728 007 (SCM)  * Fig. 7; column 5, lines 42 - 68 * | 6 | TECHNICAL FIELDS SEARCHED (Int. Cl.) 3 |
| | DE - A1 - 2 723 483 (EBAUCHES)  * Drawing; page 5, lines 10 - 21 * | 7 | |

EPO Form 1503.2  05.78